# EUROPEAN PATENT APPLICATION

(11) **EP 3 772 025 A1**
(43) Date of publication of application: **03.02.2021**
(21) Application number: 19189627.3
(22) Date of filing: 01.08.2019
(51) Int. Cl.: G06Q 10/00, G06N 5/02

(54) **METHOD FOR DETERMINING AT LEAST ONE DEFECTIVE NODE IN AN INPUT GRAPH**

(71) Applicant: Siemens Aktiengesellschaft, 80333 München (DE)
(72) Inventor: Frank, Johannes, 81673 München (DE); Joblin, Mitchell, 81825 München (DE); Rümmele, Nataliia, 81739 München (DE)

(57) **Abstract**

The invention is directed to a Computer-implemented method for determining at least one defective node in an input graph, wherein the input graph comprises a plurality of nodes which are connected by a plurality of edges, wherein the input graph corresponds to a defective project, each node of the plurality of nodes corresponds to a project element, and each edge between two nodes of the plurality of edges corresponds to a relationship, comprising the steps of a.

Providing the input graph; b. Assigning a likelihood score to each node of the plurality of nodes using a trained supervised machine learning model on the basis of the input graph, wherein c. the likelihood score indicates how likely the node is to be defective; and d. Selecting the most likely defective nodes depending on the likelihood scores. Further, the invention relates to a corresponding computer program product and system.

## Description

### 1. Technical field

The present invention relates to a computer-implemented method for determining at least one defective node in an input graph. Further, the invention relates to a corresponding computer program product and system.

### 2. Prior art

Technical systems in different technical domains can be highly complex and comprise a plurality of different technical components, in particular hardware and/or software components. A software component can be executed on a hardware component such as a PLC. The components form configuration items of a configurable technical system which can be configured for and due to a variety of different use cases.

Software platforms can provide a functionality for a user to configure a highly tailored solution or configuration, i.e. configuration instance of the configurable technical system. The configuration of a technical system can exhibit a number of challenges when it comes to predicting an operation behavior of the configured system's instances.

For example, the TIA portal is known from the prior art as configuration software in context of industrial automation. The user can add, copy and remove devices or components of industrial plants using the tool. For example, any configuration and parameter of the aforementioned devices, components and projects can be adapted.

The adaptation results in a new state, at worst an inconsistent state. The inconsistent state can also cause a crash or malfunction of the TIA portal, the underlying industrial plant, components and/or projects. The unexpected crashes lead to delays and sometimes to long downtimes of the industrial plant or its components, resulting in additional costs and wasted time.

In such situations, the user of the TIA portal or other experts e.g. support team are required to investigate the inconsistent state of the automation engineering project and identify problematic elements in the project. After identification of the problematic elements, they have to be fixed in a complex and time-consuming manner.

It is therefore an objective of the invention to provide a computer-implemented method for determining at least one defective node in an input graph in an efficient and reliable manner allowing for fast error handling of the defective nodes.

### 3. Summary of the invention

This problem is according to one aspect of the invention solved by a computer-implemented method for determining at least one defective node in an input graph, wherein
the input graph comprises a plurality of nodes which are connected by a plurality of edges, wherein
the input graph corresponds to a defective project,
each node of the plurality of nodes corresponds to a project element, and each edge between two nodes of the plurality of edges corresponds to a relationship,
comprising the steps of:
a. Providing the input graph;
b. Assigning a likelihood score to each node of the plurality of nodes using a trained supervised machine learning model on the basis of the input graph; wherein
c. the likelihood score indicates how likely the node is to be defective; and
d. Selecting the most likely defective nodes depending on the likelihood scores.

Accordingly, the invention is directed to a method for determining at least one defective node in an input graph having a plurality of nodes. In other words, the nodes of the input graph are classified as defective or non-defective. Hence, the defective nodes are assigned to the class defective. Additionally, the nodes can have further properties or attributes, e.g. type software or hardware element.

Thereby, the input graph corresponds to a defective project and the nodes of the input graph correspond to project elements. The project is in particular an engineering project, but not limited to engineering.

The term "defective" stands for an erroneous or inconsistent state and indicates that an element (i.e. node) which is defective leads to an inconsistent or erroneous state of the whole project. The defect may arise due to incorrect configuration of the node e.g. one or more properties are set incorrectly or the node has incorrect relationships.
In other words, the error or bug includes any kind of malfunction. The inconsistent state can lead to the aforementioned crashes or bugs of the underlying computing unit or technical system running the erroneous software element.

In a first step, the input graph is received.

In a further step, likelihood scores are assigned to the nodes of the input graph using supervised machine learning on the basis of the input graph. The scores indicate the probability or likelihood that the node is correctly assigned to the class defective. Therefore, a trained machine learning model or classifier is applied on the input graph during throughput, in particular an Artificial Intelligence model.

To the contrary, in the training phase, a set of independent input graphs is used as training data set to train the machine learning model.

Thus, in other words, the machine learning model is untrained and used in the training process with a training data set, whereas the trained machine learning model is used after training in the running system or for the method according to the invention.

In the last step, the most likely defective nodes are selected. The selected most likely defective nodes can be further processed.

For example, the most likely defective nodes can be outputted or displayed, including highlighting the defective nodes in the input graph. Color-coding can be used for highlighting or coloring the status or class of the project elements. Additionally or alternatively, the most likely defective nodes and their edges can be handled and in particular substituted by non-defective nodes and edges to fix them. The error handling or bug fixing will be explained in more detail further below.

The method according to the invention ensures an improved efficiency and accuracy in determining the defective nodes.

More precisely, the advantage is that the method enables the detection of defective nodes in an efficient and reliable manner. The same advantage applies to the error handling.

In one aspect the most likely defective nodes have likelihood scores which equal or exceed a pre-defined threshold. Accordingly, the likelihood scores can be used for selecting the most likely defective nodes. The higher the score the more likely this node is defective. The advantage is that the subsequent method steps, in particular error handling, are based on more reliable defective nodes as input data.

In another aspect the method further comprises the steps of
- determining at least one similar non-defective node and/or at least one associated topological information of the at least one similar non-defective node
   for each most likely defective node using a node similarity algorithm based on a plurality of further input graphs; wherein
- each further input graph corresponds to a non-defective project and exclusively comprises non-defective nodes, which are candidate nodes to fix the defective nodes; and
- determining at least one output graph for each most likely defective node using a project generation algorithm based on the candidate nodes; wherein
- the defective nodes and their edges are substituted by the candidate nodes and edges.

Accordingly, the identified selected most likely defective nodes and edges are fixed by substituting them by non-defective ones. The advantage is that the error handling or bug fixing is performed in a timely manner after the identification of the defective nodes according to the invention. This leads to reduced downtimes of the underlying project element, computing unit or system. Time and costs are saved.

In another aspect the topological property is at least one neighboring node, neighboring edge and/or associated subgraph. Accordingly, not just the similar non-defective nodes, but also their topological information can be considered. The topological information includes e.g. surrounding or neighboring nodes, subgraphs, nodes that are k-hops away from the current node where k is a configurable parameter or is identified via the template. This topological information can be analyzed and used for substitution of the defective nodes by the non-defective nodes.

In another aspect the method further comprises the step of performing at least one action.

In another aspect the at least one action is an action selected from the group comprising:
- Outputting the input graph, the most likely defective nodes, the at least one output graph and/or any other related data;
- Storing the input graph, the most likely defective nodes, the at least one output graph and/or any other related data;
- Displaying the input graph, the most likely defective nodes, the at least one output graph and/or any other related data; and
- Transmitting the input graph, the most likely defective nodes, the at least one output graph and/or any other related data to a computing unit for further processing.

Accordingly, the input data, data of intermediate method steps and/or resulting output data can be further handled or processed. One or more actions can be performed. The action can be equally referred to as measure. These actions can be performed by one or more computing units of the system. The actions can be performed sequentially or simultaneously. Actions include e.g. storing and processing steps. The advantage is that appropriate actions can be performed in a timely manner.

For example, the defective nodes can be displayed or highlighted in the input graph, a notification related to the defect can be outputted and/or displayed to a user by means of a display unit, e.g. including the likelihood scores of the most likely defective nodes and/or associated properties of the defective nodes.
For example, the defective nodes can be further handled and fixed. A notification about the fixes can be sent to a user.

A further aspect of the invention is a computer program product directly loadable into an internal memory of a computer, comprising software code portions for performing the steps according to any one of the preceding claims when said computer program product is running on a computer.

A further aspect of the invention is a system for determining at least one defective node in an input graph, wherein
the input graph comprises a plurality of nodes which are connected by a plurality of edges, wherein
the input graph corresponds to a defective project,
each node of the plurality of nodes corresponds to a project element, and each edge between two nodes of the plurality of edges corresponds to a relationship,
comprising the steps of:
a. Receiving unit for providing the input graph;
b. Processing unit for assigning a likelihood score to each node of the plurality of nodes using a trained supervised machine learning model on the basis of the input graph; wherein
c. the likelihood score indicates how likely the node is to be defective; and
d. Processing unit for selecting the most likely defective nodes depending on the likelihood scores.

The units may be realized as any devices, or any means, for computing, in particular for executing a software, an app, or an algorithm. For example, the processing unit may consist of or comprise a central processing unit (CPU) and/or a memory operatively connected to the CPU. The units may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the units may be implemented by a cloud computing platform.

### 4. Short description of the drawings

In the following detailed description, presently preferred embodiments of the invention are further described with reference to the following figures:
- Fig. 1: illustrates a flowchart of the method according to the invention.
- Fig. 2: illustrates an input graph and project according to an embodiment of the present invention.

### 5. Detailed description of preferred embodiments

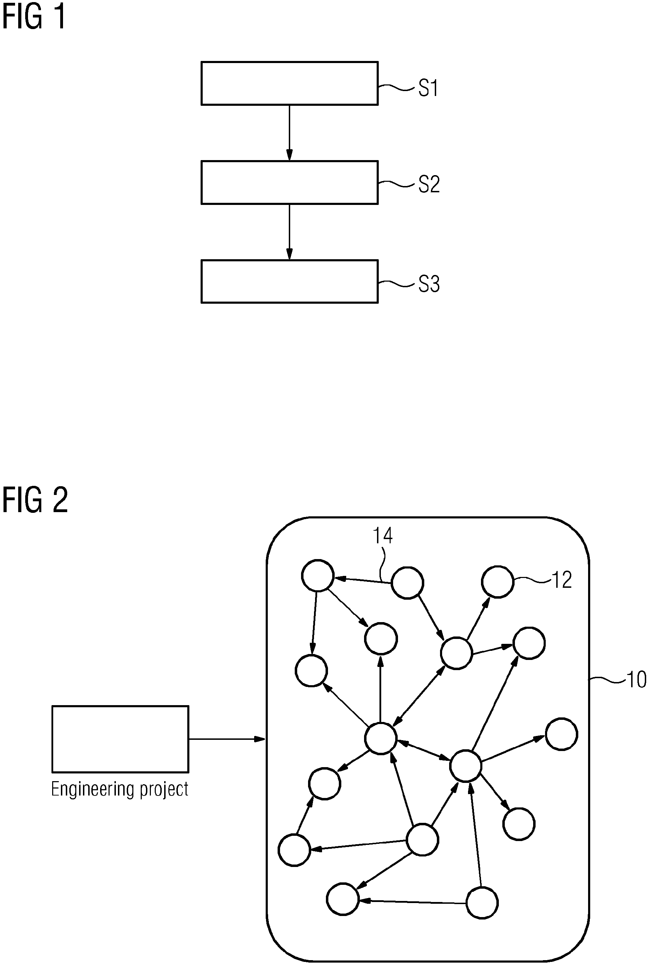

Fig. 1 illustrates a flowchart of the method according to the invention with the method steps S1 to S3. The method steps S1 to S3 will be explained in the following in more detail.

### Input graph

First, the input graph 10 is received S1. The input graph 10 comprises nodes 12 and edges 14. The input graph 10 is associated with the defective project. In other words, the defective project is represented as graph. Accordingly, the nodes 12 are associated with the project elements, including e.g. Software and Hardware elements. The nodes are connected, if a relationship exists between the project elements. An exemplary input graph 10 is shown in Figure 2 and will be further explained in more detail in view of the Training.

### Determination of defective nodes in the input graph using a trained supervised machine learning model S3, S4

Then, the trained supervised machine learning model is applied on the input graph 10, in particular a trained Artificial Intelligence model.

This step S2 results in a likelihood score per each node 12 in the input graph 10. Further, the top most likely defective nodes 12 can be selected by using a predefined threshold value.

### Training

The supervised machine learning model has to be trained using historic evidence before being applied during runtime. Existing projects and/or additional log files which report the state or class of the project elements can be used as historic evidence for non-defective and defective elements. This historic evidence is used to build an input graph, in particular the training graph.

In other words, the input graph is used to train the supervised machine learning model, in particular an Artificial Intelligence model.

As previously noted, the nodes correspond to elements in the project. Two nodes are connected if a relationship exists between the corresponding elements in the project. Nodes can have additional properties e.g. the state or class defect or non-defect of the corresponding element in the project.

The supervised machine learning model is based on the graph topology and node properties. The model assigns a likelihood score to each node. This likelihood score indicates how likely this node is to be defective. The higher the score the more likely this node is defective and leads to an inconsistent or erroneous state of the project.

The iterative algorithm to train the supervised machine learning model to differentiate between defective and non-defective nodes includes the following major steps:
1. Node neighborhood sampling which selects some defective and non-defective nodes from historic projects as training examples at each iteration of the algorithm.
2. Sampling supportive fields produces a set of nodes per each node selected in the previous step to provide further contextual information. This information encompasses topological properties of the selected nodes.
3. Node attributes are selected for all nodes selected in the previous two steps. Hence, the model is not just trained using the topological properties of the constructed graph representations for historic projects, but also using the attributes (which provide meta information) of nodes.
4. Mini-batch preprocessing produces a vector representation for each node selected in the first step. The vector representation includes information from steps 2 and 3. Node attributes are encoded numerically, i.e., categorical attributes are encoded using one-hot encoding, word2vec model can be used to encode string attributes.
5. Supervised Machine learning model is trained using mini-batches produced by the previous steps. Such a machine learning model can be a neural network, e.g. a multilayer perceptron, or an alternative learning algorithm. The outcome of this procedure is a learnt model, which given a vectorized representation of a node (as described in the step 4), assigns it a score that indicates how likely this node is to be defective.

### Node similarity algorithm

Then, the most similar nodes 12 of the non-defective historic projects can be determined for the selected most likely defective nodes using the node similarity algorithm. The node similarity algorithm can follow the aforementioned steps 1 to 4 from the previous section. Instead of training a supervised model in step 5, a machine learning model e.g. multilayer perceptron using link prediction loss function is trained. These most similar nodes are known to be non-defective. Hence, they can be used as candidate templates to fix the defective nodes 12. The candidate templates can comprise not just the information about the non-defective nodes, but also about their corresponding topological properties. In other words, the candidate templates form patterns for the generation of fixes. Several sets of candidate templates can be derived using the node similarity algorithm.

### Project generation algorithm

Then, output graphs with fixes can be determined for the most likely defective nodes using the project generation algorithm. The project generation algorithm can be a graph generation algorithm which incorporates hard and soft constraints as well as templates uncovered in the previous step.
This algorithm takes the input graph as input and tries to generate a new valid synthetic graph by substituting defective nodes with candidate templates.

A separate fixed synthetically generated output graph is derived for each set of candidate templates. The output graphs can be assigned to scores which indicate their respective relevance. This score can be further used to rank the output graphs. The ranked output graphs can be presented to the user, such as the support team or developers. The output graphs are associated with the fixed projects. The users can validate and accept one or more fixed projects.

The fixed projects comprise project elements, as explained further above. The project elements, in particular Software elements are fixed and thus non-defective. The Software can be implemented on any computing unit or underlying technical system without any bugs or inconsistencies.

### Reference signs

- 10: input graph
- 12: node
- 14: edge
- S1 to S3: method steps S1 to S3

## Claims

1. Computer-implemented method for determining at least one defective node in an input graph (10), wherein
the input graph (10) comprises a plurality of nodes (12) which are connected by a plurality of edges (14), wherein
the input graph (10) corresponds to a defective project, each node of the plurality of nodes (12) corresponds to a project element, and each edge (14) between two nodes (12) of the plurality of edges (14) corresponds to a relationship,
comprising the steps of:
a. Providing the input graph (S1);
b. Assigning a likelihood score to each node (12) of the plurality of nodes (12) using a trained supervised machine learning model on the basis of the input graph (10)(S2); wherein
c. the likelihood score indicates how likely the node (12) is to be defective; and
d. Selecting the most likely defective nodes (12) depending on the likelihood scores (S3).

2. Method according to claim 1, wherein the most likely defective nodes have likelihood scores which equal or exceed a pre-defined threshold.

3. Method according to claim 1 or claim 2, wherein the method further comprises the step of
- Determining at least one similar non-defective node and/or at least one associated topological information of the at least one similar non-defective node
for each most likely defective node using a node similarity algorithm based on a plurality of further input graphs; wherein
- each further input graph corresponds to a non-defective project and exclusively comprises non-defective nodes, which are candidate nodes to fix the defective nodes; and
- Determining at least one output graph for each most likely defective node using a project generation algorithm based on the candidate nodes; wherein
- the defective nodes and their edges are substituted by the candidate nodes and edges.

4. Method according to claim 3, wherein the topological property is at least one neighboring node, neighboring edge and/or associated subgraph.

5. Method according to any of the preceding claims, wherein the method further comprises the step of performing at least one action.

6. Method according to claim 5,
wherein the at least one action is an action selected from the group comprising:
- Outputting the input graph, the most likely defective nodes, the at least one output graph and/or any other related data;
- Storing the input graph, the most likely defective nodes, the at least one output graph and/or any other related data;
- Displaying the input graph, the most likely defective nodes, the at least one output graph and/or any other related data; and
- Transmitting the input graph, the most likely defective nodes, the at least one output graph and/or any other related data to a computing unit for further processing.

7. A computer program product directly loadable into an internal memory of a computer, comprising software code portions for performing the steps according to any one of the preceding claims when said computer program product is running on a computer.

8. System for determining at least one defective node in an input graph, wherein
the input graph comprises a plurality of nodes which are connected by a plurality of edges, wherein
the input graph corresponds to a defective project, each node of the plurality of nodes corresponds to a project element, and each edge between two nodes of the plurality of edges corresponds to a relationship, comprising the steps of:
a. Receiving unit for providing the input graph;
b. Processing unit for assigning a likelihood score to each node of the plurality of nodes using a trained supervised machine learning model on the basis of the input graph; wherein
c. the likelihood score indicates how likely the node is to be defective; and
d. Processing unit for selecting the most likely defective nodes depending on the likelihood scores.
